# FASCICULE DE BREVET EUROPEEN

(11) **EP 2 067 513 B1**
(45) Date de publication et mention de la délivrance du brevet: **11.08.2010**
(21) Numéro de dépôt: 08170682.2
(22) Date de dépôt: 04.12.2008
(51) Int. Cl.: B01D 29/09, B01D 33/056

(54) **Système de fermeture de bande de filtration**
Verschlusssystem für Filterband
Closing system for a filtering strip

(30) Priorité: 07.12.2007 FR 0708537
(43) Date de publication de la demande: 10.06.2009
(73) Titulaire: Sartori, Pascal, 73230 Barby (FR)
(72) Inventeur: Sartori, Pascal, 73230, BARBY (FR)
(74) Mandataire: Verriest, Philippe

(56) Documents cités:
- WO-A-2007/033698
- FR-A- 1 065 983
- US-A- 2 812 065
- US-A- 3 441 951
- US-A- 3 478 991
- US-A- 4 112 570

## Description

L'invention concerne un élément et un système de fixation de bandes de filtration, destinés notamment à la fermeture de bandes sans fin.

La filtration est un procédé de séparation permettant de séparer les constituants d'un mélange hétérogène.

Pour mettre en oeuvre un tel procédé, des filtres à bande sans fin à dépression, pression ou gravitaire sont utilisés.

Traditionnellement, ces filtres sont équipés de bandes de filtration. Ces bandes de filtration présentent des extrémités sur lesquelles sont disposés des systèmes de fixation permettant la fixation d'une extrémité de bande à une autre extrémité de bande.

De façon connue, un système de fixation comporte un ensemble de boucles disposées dans un plan vertical et un organe de blocage qui passe dans les boucles.

L'utilisation d'un tel dispositif présente l'inconvénient majeur selon lequel il présente des interstices capables d'altérer la fonction de filtration. De plus, le montage et le démontage d'un tel système de fixation est traditionnellement difficile à mettre en oeuvre.

Le document W02007/033698 décrit pour sa part un élément de fixation selon le préambule de la revendication 1.

L'invention vise à résoudre en tout ou partie ces inconvénients en proposant un système de fixation permettant d'améliorer les systèmes de fermeture bandes de filtration existant, en particulier pour des largeurs de bandes supérieures à un mètre.

A cet effet, l'invention consiste pour cela en un élément de fixation de bandes de filtration destiné notamment à la fermeture de bandes sans fin, comprenant un ensemble de dents situés sur une extrémité de portion de bande à fixer, l'ensemble de dents délimitant un ensemble d'intervalles, l'ensemble de dents pouvant être reçu dans les intervalles formés par un ensemble de dents d'un élément de fixation du même type situé en regard, chaque dent comprenant au moins un logement traversant, orienté parallèlement à l'axe de l'extrémité de fixation de la bande et s'étendant entre deux ouvertures, destiné à l'introduction d'un organe de blocage, les logements ménagés dans les dents appartenant à deux ensembles de dents étant conçus de façon à être situés de façon alignée lorsque les dents d'un ensemble sont reçues dans les intervalles formés par les dents d'un autre ensemble, caractérisé en ce que des encoches sont ménagées dans une paroi des logements au niveau de l'ouverture du logement , pour faciliter l'introduction et le suivi de l'introduction de l'organe de blocage par un opérateur..

Grâce aux dispositions selon l'invention et en particulier à la présence des encoches, l'introduction et le suivi de l'introduction de l'organe de blocage par un opérateur sont facilités, même après plusieurs cycles de montage et démontage.

Avantageusement, les dents sont de forme trapézoïdale.

Cette caractéristique permet une meilleure répartition des efforts.

Préférentiellement, les dents comprennent une boucle souple, à l'intérieur de laquelle est délimité au moins un logement.

Selon une caractéristique de l'invention, chaque dent comprend au moins deux logements.

Préférentiellement, la délimitation entre les logements est réalisée par une couture, par soudure, collage ou moulage.

L'invention se rapporte en outre à un système de fixation de bandes destinées à la filtration, caractérisé en ce qu'il comprend un premier et un second éléments de fixation selon l'invention, l'ensemble de dents du premier élément de fixation étant destiné à être reçu dans les intervalles formés par l'ensemble de dents du second élément de fixation situées en regard, au moins un organe de blocage destiné à être introduit en translation dans la série de logements alignés de deux ensembles.

Un tel système présente l'avantage considérable de présenter une surface sensiblement continue. En effet, il permet de fixer les bandes les unes aux autres sans présenter d'interstices trop importants. Grâce à ces dispositions, la fonction de filtration de l'ensemble comportant un tel système selon l'invention n'est pas altérée.

Avantageusement, l'organe de blocage est sensiblement plat.

Selon une caractéristique de l'invention, la largeur de l'organe de blocage est supérieure ou égale à 5 mm.

L'invention sera mieux comprise à l'aide de la description détaillée qui est exposée ci-dessous en regard du dessin annexé dans lequel :
La figure 1 est une vue éclatée du système de fixation selon l'invention ;
La figure 2 est une vue de dessus du système de fixation ;

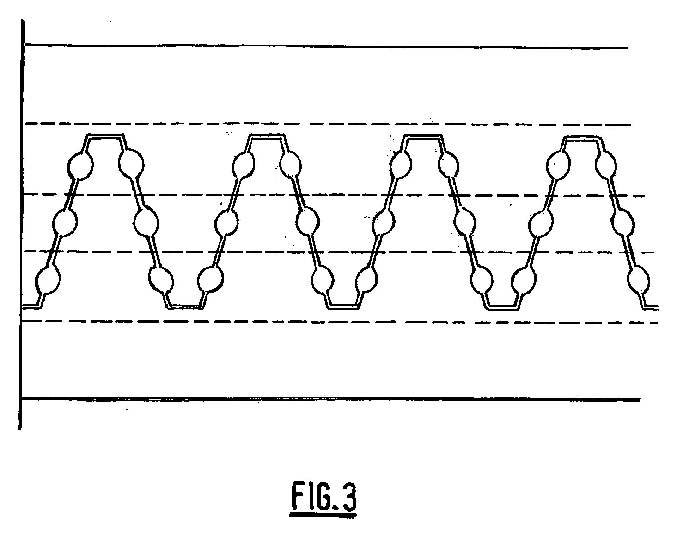

La figure 3 est une vue de dessus du système de fixation lorsque les dents d'une première bande sont reçues dans les intervalles délimités par les dents d'une seconde bande.

Dans la description détaillée qui va suivre des figures définies ci-dessus, les mêmes éléments ou les éléments remplissant des fonctions identiques pourront conserver les mêmes références de manière à simplifier la compréhension de l'invention.

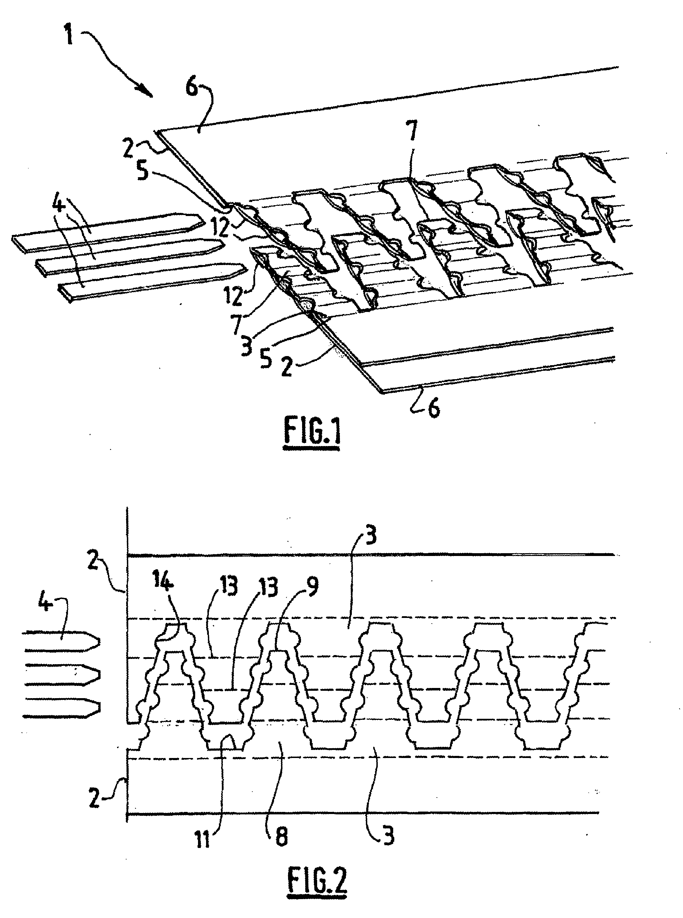

Un système de fixation 1 de bandes 2, tel que représenté à la figure 1, comprend deux portions de bandes 2 à fixer comportant chacune un élément de fixation 3 et des organes de blocage 4.

Chaque portion de bande 2 de filtration représentée comporte une première extrémité et une seconde extrémité longitudinales, respectivement 5 et 6. Un élément de fixation 3 est fixé sur la première extrémité longitudinale 5 de chaque portion de bande 2 par couture ou collage. La seconde extrémité longitudinale 6 est laissée libre.

L'élément de fixation 3 comporte un ensemble de dents 7. Les dents 7 sont de forme sensiblement trapézoïdale. Les dents 7 présentent une grande base 8 et une petite base 9.

Chaque ensemble de dents 7 délimite un ensemble d'intervalles 11. Il est à noter que chaque intervalle 11 a une forme sensiblement trapézoïdale. Un tel intervalle 11 délimité par deux dents 7 situées sur l'extrémité longitudinale 5 d'une première bande 2 est destiné à recevoir une dent 7 située en regard sur l'extrémité longitudinale 5 d'une seconde bande 2.

Ainsi, l'ensemble des dents 7 d'une première bande 2 délimite un ensemble d'intervalles 11 de forme trapézoïdale destinés à recevoir un ensemble de dents 7 d'une seconde bande 2 lorsqu'elles sont situées en regard. Il est à noter qu'avec une telle configuration, l'ensemble des dents 7 de la seconde bande 2 délimite un ensemble d'intervalles 11 de forme trapézoïdale destinés à recevoir l'ensemble de dents 7 de la première bande 2 lorsqu'elles sont situées en regard.

Chaque dent 7 comprend un ensemble de logements 12 traversant orientés parallèlement à l'axe de l'extrémité longitudinale 5 de la bande 2. Chaque logement 12 présente deux ouvertures.

Selon le mode de réalisation représenté à la figure 1, chaque dent 7 trapézoïdale se présente sous la forme d'une boucle souple. Des coutures 13, parallèles à l'extrémité longitudinale 5, sont réalisées sur la boucle positionnée à plat. Les coutures 13 ont pour effet de délimiter trois logements 12 du type précité. Les coutures 13 sont réalisées de manière à ce que les dimensions latérales de l'ouverture chaque logement 12 soient sensiblement identiques.

Chaque logement 12 comprend une paroi. Une encoche 14 est ménagée dans la paroi de chaque logement 12 au niveau de chaque ouverture. Ces encoches 14 débouchent sur une face ou une partie de paroi de la dent 7 visible par un opérateur. Ainsi, ces encoches permettent un suivi du passage des organes de blocage dans les logements. Les encoches facilitent également l'introduction de ces organes de blocage dans chaque dent.

De préférence, les encoches 14 sont sensiblement arrondies. Elles ont sensiblement une forme semi elliptique. Elles sont destinées à faciliter l'introduction de l'organe de blocage 4.

Trois organes de blocage 4 identiques sont représentés aux figures 1 et 2.

Chaque organe de blocage 4 est de forme sensiblement allongée et plane. Il présente une forme sensiblement rectangulaire dont une extrémité latérale suivant sa largeur se prolonge par un embout. Cet embout est de forme sensiblement trapézoïdale. Il est à noter que l'organe de blocage 4 est monobloc.

Un tel organe de blocage 4 possède de préférence une largeur supérieure ou égale à un centimètre mais pas exclusivement.

Pour mettre en oeuvre le système de fixation, deux bandes 2 du type précité sont utilisées.

Lorsque l'ensemble des dents 7 de la première bande 2 est reçu dans les intervalles 11 formés par les dents 7 situées en regard de la seconde bande 2 et lorsque l'ensemble des dents 7 de la seconde bande 2 est reçu dans les intervalles 11 formés par les dents 7 situées en regard de la première bande 2, les logements 12 des dents 7 de la première bande 2 sont alignés avec les logements 12 de la seconde bande 2. Plus précisément, le premier logement 12 de chaque dent 7 de la première bande 2 est aligné avec le troisième logement 12 de chaque dent 7 de la seconde bande 2. Le second logement 12 de chaque dent 7 de la première bande 2 est aligné avec le second logement 12 de chaque dent 7 de la seconde bande 2. Le troisième logement 12 de chaque dent 7 de la première bande 2 est aligné avec le premier logement 12 de chaque dent 7 de la seconde bande 2.

Il est à noter qu'avec une telle configuration, les encoches 14 situées au niveau des logements 12 d'une dent 7 de la première bande 2 sont en regard des encoches 14 situées sur une dent 7 de la seconde bande 2 lorsque l'ensemble des dents 7 de la première bande 2 est reçu dans les intervalles 11 formés par les dents 7 situées en regard de la seconde bande 2. La juxtaposition de deux encoches 14 situées en regard ont une forme sensiblement semi elliptique.

Lorsque les deux bandes 2 sont mises en place, un organe de blocage 4 est inséré dans les logements 12 ménagés dans les dents 7 appartenant à deux ensembles de dents 7, les logements 12 étant situés de façon alignée lorsque les dents 7 d'un ensemble sont reçues dans les intervalles 11 formés par les dents 7 d'un autre ensemble. L'insertion de l'organe de blocage 4 dans chaque logement 12 est facilitée par la présence des encoches 14 qui permettent la pénétration de l'extrémité de l'organe de blocage 4 dans le logement 12 de façon aisée.

Il est également possible, pour un opérateur, d'utiliser un outil mis en prise dans l'encoche 14 ou un doigt pour écarter la paroi du logement 12 et faciliter l'introduction de l'organe de blocage 4.

Selon une variante, la séparation entre les logements peut être réalisée par thermo soudure ou collage ou moulage.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Élément de fixation (3) de bandes (2) de filtration destiné notamment à la fermeture de bandes sans fin, comprenant un ensemble de dents (7) situés sur une extrémité (5) de portion de bande (2) à fixer, l'ensemble de dents (7) délimitant un ensemble d'intervalles (11), l'ensemble de dents (7) pouvant être reçu dans les intervalles (11) formés par un ensemble de dents (7) d'un élément de fixation (3) du même type situé en regard,
chaque dent (7) comprenant au moins un logement (12) traversant, orienté parallèlement à l'axe de l'extrémité (5) de fixation de la bande et s'étendant entre deux ouvertures, destiné à l'introduction d'un organe de blocage,
les logements (12) ménagés dans les dents (7) appartenant à deux ensembles de dents (7) étant conçus de façon à être situés de façon alignée lorsque les dents (7) d'un ensemble sont reçues dans les intervalles (11) formés par les dents (7) d'un autre ensemble,
**caractérisé en ce que**
des encoches (14) sont ménagées dans une paroi des logements (12) au niveau de l'ouverture du logement (12), pour faciliter l'introduction et le suivi de l'introduction de l'organe de blocage par un opérateur.

2. Élément de fixation (3) de bandes (2) de filtration selon la revendication 1, dans lequel les dents (7) sont de forme trapézoïdale.

3. Élément de fixation (3) de bandes (2) de filtration selon l'une des revendications 1 ou 2, dans lequel les dents (7) comprennent une boucle souple, à l'intérieur de laquelle est délimité au moins un logement (12).

4. Élément de fixation (3) de bandes (2) selon l'une des revendications précédentes, dans lequel chaque dent (7) comprend au moins deux logements (12).

5. Élément de fixation (3) de bandes (2) de filtration selon la revendication 4, dans lequel la délimitation entre les logements (12) est réalisée par une couture (13), par soudure, collage ou moulage.

6. Système de fixation de bandes (2) de filtration destinées à la filtration, **caractérisé en ce qu'**il comprend :
- un premier et un second éléments de fixation (3) selon l'une des revendications précédentes, l'ensemble de dents (7) du premier élément de fixation (3) étant destiné à être reçu dans les intervalles (11) formés par l'ensemble de dents (7) du second élément de fixation (3) situées en regard,
- au moins un organe de blocage (4) destiné à être introduit en translation dans la série de logements (12) alignés de deux ensembles.

7. Système de fixation selon la revendication 6, dans lequel l'organe de blocage (4) est sensiblement plat.

8. Système de fixation selon la revendication 6 ou 7, dans lequel la largeur de l'organe de blocage (4) est supérieure ou égale à 5 mm.

## Claims

1. An element (3) for fastening filter belts (2), in particular for closing endless belts, comprising a set of teeth (7) located at one end (5) of a belt portion (2) to be fastened, the set of teeth (7) delimiting a set of spaces (11), wherein the set of teeth (7) can be received in the spaces (11) formed by a set of teeth (7) of a fastening element (3) of the same kind located opposite,
each tooth (7) comprising at least one through housing (12), oriented in parallel to the axis of the fastening end (5) of the belt and extending between two openings, designed for introducing a blocking member,
the housings (12) made in the teeth (7) belonging to two sets of teeth (7) being designed so as to be located in alignment when the teeth (7) of one set are received in the spaces (11) formed by the teeth (7) of another set,
**characterized in that**
notches (14) are made in a wall of the housings (12) at the opening of the housing (12) so as to facilitate the insertion and tracking of the insertion of the blocking member by an operator.

2. The element (3) for fastening filter belts (2) according to claim 1, wherein the teeth (7) have a trapezoidal shape.

3. The element (3) for fastening filter belts (2) according to any of claims 1 or 2, wherein the teeth (7) comprise a flexible loop, inside which at least one housing (12) is delimited.

4. The element (3) for fastening filter belts (2) according to any of the preceding claims, wherein each tooth (7) comprises at least two housings (12).

5. The element (3) for fastening filter belts (2) according to claim 4, wherein the delimitation between the housings (12) is made by a seam (13), by a weld, gluing, or molding.

6. A system for fastening filter belts (2) for filtration, **characterized in that** it comprises:
- a first and a second fastening element (3) according to any of the preceding claims, the set of teeth (7) of the first fastening element (3) being designed to be received in the spaces (11) formed by the set of teeth (7) of the second fastening element (3) located opposite,
- at least one blocking member (4) designed to be inserted by translation into a series of aligned housings (12) of two sets.

7. The fastening system according to claim 6, wherein the blocking member (4) is substantially flat.

8. The fastening system according to claims 6 or 7, wherein the width of the blocking member (4) is greater or equal to 5 mm.

## Patentansprüche

1. Element (3) zum Befestigen von Filterbändern (2), insbesondere zum Schließen von endlosen Bändern, umfassend eine Anordnung von Zähnen (7), die sich an einem Ende (5) eines zu befestigenden Bandabschnitts (2) befinden, wobei die Zahnanordnung (7) eine Anordnung von Zwischenräumen (11) abgrenzt, wobei die Zahnanordnung (7) in den Zwischenräumen (11) aufgenommen werden kann, die von einer Zahnanordnung (7) eines gleichartigen gegenüberliegenden Befestigungselements (3) gebildet werden,
wobei jeder Zahn (7) mindestens eine durchgehende Aufnahme (12), die parallel zur Achse des Befestigungsendes (5) des Bandes orientiert ist, sich zwischen zwei Öffnungen erstreckt und zum Einführen eines Blockierungsorgans gedacht ist, umfasst,
wobei die Aufnahmen (12), die in den Zähnen (7) eingerichtet sind, zwei Zahnanordnungen (7) angehören, die ausgelegt sind, um ausgerichtet zu sein, wenn die Zähne (7) einer Anordnung in den Zwischenräumen (11), die von den Zähnen (7) einer anderen Anordnung gebildet werden, aufgenommen werden,
**dadurch gekennzeichnet, dass**
Einkerbungen (14) in einer Wand der Aufnahmen (12) an der Öffnung der Aufnahme (12) eingerichtet sind, um die Einführung und Verfolgung der Einführung des Blockierungsorgans durch eine Bedienperson zu erleichtern.

2. Element (3) zum Befestigen von Filterbändern (2) nach Anspruch 1, wobei die Zähne (7) trapezförmig sind.

3. Element (3) zum Befestigen von Filterbändern (2) nach einem der Ansprüche 1 oder 2, wobei die Zähne (7) eine biegsame Schleife umfassen, in der mindestens eine Aufnahme (12) abgegrenzt ist.

4. Element (3) zum Befestigen von Filterbändern (2) nach einem der vorhergehenden Ansprüche, wobei jeder Zahn (7) mindestens zwei Aufnahmen (12) umfasst.

5. Element (3) zum Befestigen von Filterbändern (2) nach Anspruch 4, wobei die Abgrenzung zwischen den Aufnahmen (12) durch eine Naht (13), durch eine Schweißverbindung, Kleben oder Formen ausgebildet wird.

6. System zum Befestigen von Filterbändern (2), die zum Filtern gedacht sind, **dadurch gekennzeichnet, dass** es Folgendes umfasst:
- ein erstes und ein zweites Befestigungselement (3) nach einem der vorhergehenden Ansprüche, wobei die Zahnanordnung (7) des ersten Befestigungselements (3) dazu gedacht ist, um in den Zwischenräumen (11) aufgenommen zu werden, die von der Zahnanordnung (7) des gegenüberliegenden zweiten Befestigungselements (3) gebildet werden,
- mindestens ein Blockierungsorgan (4), das dazu gedacht ist, um translationsmäßig in die Reihe von ausgerichteten Aufnahmen (12) von zwei Anordnungen eingeführt zu werden.

7. Befestigungssystem nach Anspruch 6, wobei das Blockierungsorgan (4) im Wesentlichen flach ist.

8. Befestigungssystem nach Anspruch 6 oder 7, wobei die Breite des Blockierungsorgans (4) größer oder gleich 5 mm ist.
